# FASCICULE DE BREVET EUROPEEN

(11) **EP 3 230 138 B1**
(45) Date de publication et mention de la délivrance du brevet: **17.10.2018**
(21) Numéro de dépôt: 15832883.1
(22) Date de dépôt: 10.12.2015
(51) Int. Cl.: B60T 13/74, F16D 51/24

(54) **ACTIONNEUR ELECTRIQUE POUR LEVIER DE FREIN DE PARKING AU SEIN D'UN FREIN A TAMBOUR**
ELEKTRISCHES STELLGLIED FÜR DEN HEBEL EINER FESTSTELLBREMSE IN EINEM TROMMELBREMSENMODUL
ELECTRIC ACTUATOR FOR A PARKING BRAKE LEVER ARRANGED IN A DRUM BRAKE UNIT

(30) Priorité: 11.12.2014 FR 1462279
(43) Date de publication de la demande: 18.10.2017
(73) Titulaire: Foundation Brakes France, 93700 Drancy (FR)
(72) Inventeur: BOURLON, Philippe, 77230 Dammartin en Goele (FR); DUPAS, Christophe, 91120 Palaiseau (FR); CUBIZOLLES, Cyril, 93700 Drancy (FR)
(74) Mandataire: IPAZ
(86) Numéro de dépôt international: PCT/EP2015/079293
(87) Numéro de publication internationale: WO 2016/092029

(56) Documents cités:
- WO-A1-2007/099040
- US-A- 4 955 458
- US-A1- 2014 345 989

## Description

L'invention se rapporte à un actionneur électrique destiné à manoeuvrer le levier de frein de stationnement et/ou de secours d'un frein à tambour de véhicule d'un type muni d'un levier prévu pour être actionné par traction de câble, ou d'un levier similaire. Cet actionneur est d'un type comprenant un élément d'actionnement qui est mobile dans un plan parallèle au plateau pour faire pivoter ledit levier.

Selon l'invention, cet actionneur comprend un membre d'actionnement monté pivotant par rapport au plateau autour d'un axe d'actionneur parallèle à l'axe de la roue et est entraîné en rotation par un moteur électrique. Ce membre d'actionnement porte l'élément d'actionnement, dans une position écartée dudit axe d'actionneur, et forme ainsi une came qui actionne la partie de manoeuvre, du levier par un effet de manivelle.

De préférence, le membre d'actionnement est solidaire en rotation d'un arbre de pivot solidaire d'un secteur de pignon d'actionnement, lui-même entraîné par une vis sans fin entraînée par le moteur électrique approprié (par exemple de type à courant continu avec ou sans balais, ou autre), directement ou par l'intermédiaire d'un réducteur.

Elle concerne en outre un frein à tambour ou un véhicule comprenant un tel actionneur.

### Etat de la technique

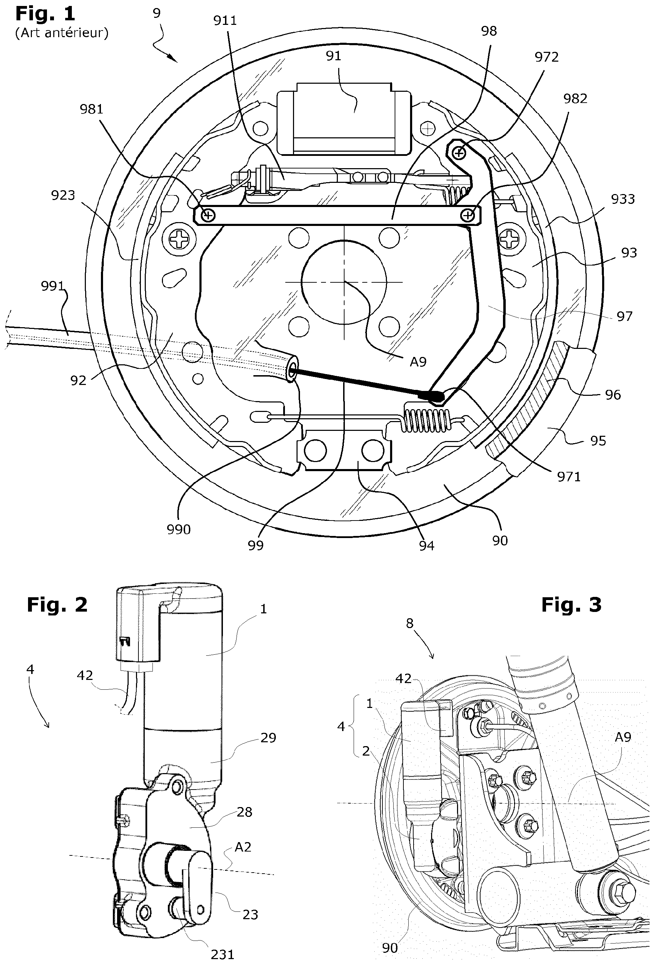

En FIGURE 1 est illustré un frein à tambour 9 d'un type classique dans l'état de la technique, tel qu'utilisé dans les véhicules routiers et plus particulièrement les automobiles ou utilitaires légers. Ce mécanisme comprend un tambour 95 coaxial à une roue dont il est solidaire, portant une jupe coiffant deux segments 92, 93 en arcs de cercle montés face à face autour de son axe de rotation A9 sur un plateau 90, lequel est fixe par rapport au demi-train qui porte la roue. Dans sa fonction de frein de service pour ralentir et arrêter le véhicule, ce frein est actionné par un actionneur hydraulique 91. Celui-ci est muni de deux pistons opposés qui écartent les extrémités mobiles des segments pour mettre leurs garnitures 923, 933 en appui contre la piste de frottement 93 du tambour, pendant que les autres extrémités des segments prennent appui sur une plaque d'ancrage 94 solidaire du plateau.

La fonction de frein de stationnement consiste à maintenir un véhicule immobilisé de façon continue pendant de longues durées. La fonction de frein de secours consiste à ralentir un véhicule en mouvement de façon exceptionnelle, par exemple en cas de défaillance du circuit de commande du frein de service. Très souvent, ce fonctionnement est réalisé par le même mécanisme que le frein de stationnement.

Depuis longtemps, comme illustré en FIGURE 1, il est connu d'assurer cette fonction au sein du même frein à tambour 9 que pour le frein de service, à l'aide d'un levier 97 tiré par un câble 99 actionné et maintenu sous tension par une manette de commande disposée dans l'habitacle et munie d'un mécanisme à cliquet. Dans le frein à tambour, le levier 97 pivote 972 sur l'extrémité mobile d'un segment 92, et l'écarte du segment opposé 93 par une biellette de réaction 98. Cette biellette de réaction est par exemple articulée à une extrémité 981 sur ce levier 97 et à l'autre extrémité 982 sur le segment opposé 93.

Ce câble 99 pénètre dans le mécanisme par une ouverture 990 traversant le plateau 90, et il est entouré d'une gaine flexible qui s'arrête à l'extérieur du plateau et prend appui sur les bords de cette ouverture.

Actuellement, dans les freins à tambour équipés d'un frein de parking électrique, il est connu d'utiliser des actionneurs électromécaniques, par exemple un tire-câble motorisé qui agit sur ce câble de frein de stationnement. Cette solution est très simple à mettre en oeuvre sur des modèles existants, et permet de bénéficier de l'élasticité de l'ensemble formé par le câble et sa gaine pour absorber les variations de serrage en cours de stationnement.

Il a aussi été proposé de réaliser la fonction de frein de parking en remplaçant ce mécanisme de levier par un actionneur agissant directement sur les segments, par exemple des pistons de poussée interne au mécanisme de frein, comme par exemple dans le document WO200799040. De façon similaire, le document US 2014/345989 A1 propose un actionneur qui pousse sur une extrémité de segment, par un crochet au bout d'une tige filetée, déplacée par un écrou. L'écrou est actionné en rotation par un motoréducteur d'arbre parallèle à la vis, avec un pignon droit intermédiaire.

Un but de l'invention est de pallier tout ou partie des inconvénients de l'état de la technique pour la mise en place d'une gestion automatisée du frein de stationnement et/ou de secours en minimisant les coûts de conception, de fabrication ou de montage, avec une bonne souplesse et simplicité de conception ou d'industrialisation, par exemple d'un modèle à l'autre, avec une bonne efficacité et robustesse de fonctionnement et en limitant l'encombrement et la masse nécessaire.

### Exposé de l'invention

L'invention propose un dispositif d'actionnement, appelé aussi actionneur ou actuateur, pour réaliser la fonction de frein de stationnement et/ou de secours au sein d'un frein à tambour de véhicule. Un tel frein comprend un tambour coaxial à une roue dont il est solidaire, portant une jupe coiffant deux segments en arcs de cercle montés face à face autour de son axe de rotation sur un plateau, lequel est fixe par rapport au demi-train qui porte la roue.

Cet actionneur est d'un type comprenant un élément d'actionnement qui est mobile, par rapport au plateau, dans un plan parallèle audit plateau. Cet élément d'actionnement est agencé pour coopérer avec une partie de manoeuvre d'un levier agencé pour pivoter dans le plan du plateau de façon à écarter l'un de l'autre lesdits segments, et les mettre ainsi en appui contre l'intérieur dudit tambour. Typiquement, ce levier fonctionne par action directe sur l'un des segments, et sur l'autre segment par l'intermédiaire d'une biellette de réaction articulée à une extrémité sur ledit levier et à l'autre extrémité sur le segment opposé. Selon les configurations, lorsqu'il agit directement sur l'un des segments, ce levier peut agir sur le segment opposé par une biellette spécifique, mais aussi par la biellette de rattrapage automatique de jeu.

Selon l'invention, cet actionneur comprend un membre d'actionnement monté pivotant par rapport au plateau autour d'un axe d'actionneur parallèle à l'axe de la roue et est entraîné en rotation par un moteur électrique. Ce membre d'actionnement porte l'élément d'actionnement dans une position écartée dudit axe d'actionneur, et forme ainsi une came qui actionne la partie de manoeuvre du levier par un effet de manivelle.

L'invention peut être appliquée à de nombreux types de moteurs électriques, par exemple de type à courant continu avec ou sans balais, ou d'autres types connus.

Dans un mode de réalisation préféré, le membre d'actionnement est solidaire en rotation d'un arbre de pivot solidaire d'un pignon d'actionnement, ou d'un secteur de pignon (par exemple couvrant un angle de 90°, ou entre 60° et 120°), lui-même entraîné par une vis sans fin entraînée par le moteur électrique, directement ou par l'intermédiaire d'un réducteur.

Selon un autre aspect, l'invention propose un frein à tambour comprenant un tel actionneur qui est agencé pour actionner le levier de frein de service et/ou de secours dudit frein à tambour ; ou un véhicule ou sous-ensemble de véhicule comprenant un tel frein ou un frein comprenant un tel actionneur.

Selon une particularité de l'invention, le membre d'actionnement est situé du côté intérieur du plateau, c'est à dire du côté portant les segments, tandis que le pignon d'actionnement et le moteur qui l'entraîne sont situés du côté extérieur dudit plateau. En variante, le moteur et/ou le membre d'actionnement sont directement intégrés au plateau.

Dans un mode de réalisation alternatif, un tel frein à tambour selon l'invention est monté à l'intérieur d'un frein à disque réalisant la fonction de frein de service. Ce disque présente une partie creuse, typiquement en forme de cloche cylindrique, formant le tambour dudit frein à tambour, dans une configuration appelée "Drum In Hat" par évocation de la forme du disque qui ressemble ainsi à un chapeau. Dans ce mode de réalisation, typiquement, le frein à tambour ne comporte pas d'autre actionneur et réalise uniquement la fonction de frein de stationnement et de secours, voire une seule de ces deux fonctions.

Selon encore un autre aspect, l'invention propose un procédé de fabrication d'un frein à tambour, de préférence un frein tel exposé ici, comprenant une fourniture d'un mécanisme de frein à tambour comprenant un tambour coaxial à une roue dont il est solidaire, portant une jupe coiffant deux segments en arcs de cercle montés face à face autour de son axe de rotation sur un plateau fixe (par rapport au demi-train qui porte la roue), du type comprenant :
∘ d'une part un actionneur hydraulique agencé pour réaliser une fonction de frein de service, et
∘ d'autre part un levier agencé pour pivoter dans le plan du plateau de façon à écarter l'un de l'autre lesdits segments et les mettre en appui à l'intérieur dudit tambour sous l'effet d'une traction qui lui est appliquée par un câble.

Ce plateau comprend typiquement une ouverture qui est agencée pour laisser entrer ledit câble et est munie d'une forme agencée pour réaliser une butée d'une gaine flexible entourant ledit câble.

Selon l'invention, un tel procédé comprend en outre une étape de fixation ou d'intégration au plateau d'un actionneur électrique tel qu'exposé ici, de préférence sans monter le câble et sa gaine ou en les démontant s'ils étaient déjà présent. Cette étape peut être réalisée par exemple au montage ou lors de la conception, voire en deuxième monte ou en réparation.

### Exemples d'avantages

Comme on le comprend, l'invention permet d'obtenir un frein de parking automatisable avec peu ou pas de modification structurelle d'un frein à tambour classique.

Ainsi, à la conception mais aussi sur un produit déjà fabriqué voire assemblé, l'invention permet de réaliser un freinage de parking automatisable en actionnant électro-mécaniquement une came qui agit directement sur un levier du tambour, lequel peut être le même que celui qui était tiré par le câble ou était prévu pour cela.

Il est donc possible d'utiliser un même mécanisme pour plusieurs options de montage de véhicule, à différents stades de l'industrialisation voire même sur la chaîne de montage. Avec une même référence de frein, il est ainsi possible de choisir au dernier moment, par exemple, entre un montage à frein à main mécanique, ou à tirage électrique de câble, ou avec un actionneur électrique direct tel qu'exposé ici. De préférence la came pousse le levier pour activer le serrage du frein, mais il est aussi prévu des variantes où la came est reliée au levier de façon à activer le serrage par une traction du levier.

Le mécanisme employé est simple, robuste et peu encombrant. Il permet une grande liberté dans le choix du type de moteur ou motoréducteur, par exemple en utilisant un moteur conçu comme moteur d'essuie glace.

L'invention apporte ainsi une grande souplesse dans la conception, l'industrialisation et/ou le montage du frein et du véhicule à de nombreux stades du processus, et un moins grand nombre de références de pièces ou de sous ensembles. Son mode d'implantation permet une grande liberté de disposition du groupe motoréducteur : par exemple radiale par rapport à l'axe de la roue, si le diamètre du frein le permet, ou latérale (c'est à dire tangentielle à la rotation) dans de nombreuses orientations, fonction des contraintes extérieures d'implantation.

Le mode d'entraînement permet une grande démultiplication dans un faible encombrement et nécessite pour la manoeuvre une énergie peu importante, par exemple de l'ordre de 1000N.

Ce mécanisme fournit une irréversibilité inhérente du mécanisme, permettant ainsi plus facilement un maintien du frein de stationnement sans apport d'énergie, et sans nécessiter un mécanisme antiretour ou à cliquet.

Des modes de réalisation variés de l'invention sont prévus, intégrant selon l'ensemble de leurs combinaisons possibles les différentes caractéristiques optionnelles exposées ici.

### Liste des figures

D'autres particularités et avantages de l'invention ressortiront de la description détaillée d'un mode de mise en oeuvre nullement limitatif, et des dessins annexés sur lesquels :
- la FIGURE 1 est une vue de face dans l'axe de la roue qui illustre un frein à tambour selon l'état de la technique avec un levier de frein de parking à traction de câble ;
- la FIGURE 2 est une vue en perspective à l'échelle qui illustre un actionneur de frein de parking selon un exemple de mode de réalisation actuellement préféré de l'invention ;
- la FIGURE 3 est une vue à l'échelle en perspective depuis l'arrière du plateau, qui illustre un mécanisme de frein à tambour selon l'invention monté sur un demi-train arrière, représenté avec l'actionneur de frein de parking et sans le tambour ;
- la FIGURE 4 est une vue éclatée en perspective à l'échelle qui représente l'actionneur de la FIGURE 2 ;
- les FIGURE 5a et FIGURE 5b sont des vues à l'échelle en perspective et respectivement en vue de face selon l'axe de la roue, qui illustrent une variante de l'élément de manoeuvre dans son interaction avec le levier de frein de parking ;
- les FIGURE 6a et FIGURE 6b sont des vues à l'échelle de face selon l'axe de la roue, en vue partielle représentant le plateau sur la moitié droite, dans une position de frein de parking au repos et respectivement en position actionnée.

### Description d'un exemple de mode de réalisation

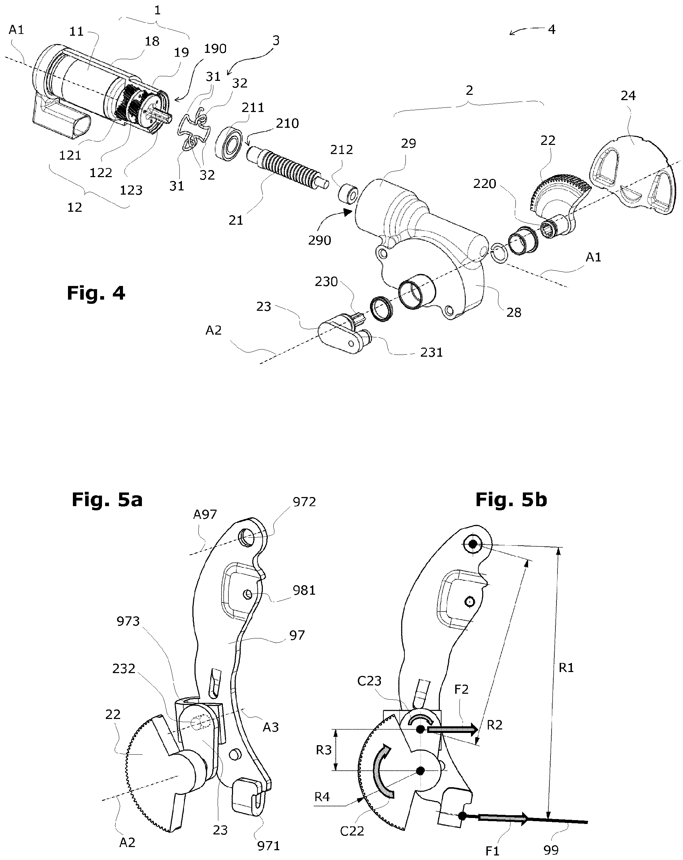

En FIGURE 2 et FIGURE 4 est illustré un actionneur 4 de frein de parking selon un exemple de mode de réalisation actuellement préféré de l'invention.

La FIGURE 3 illustre un mécanisme de frein à tambour 8 comprenant l'actionneur 4 de la FIGURE 2 pour réaliser la fonction de frein de parking, une fois monté sur un demi-train arrière gauche et représenté sans le tambour.

### Manivelle d'actionnement

Cet actionneur 4 de frein de stationnement et/ou de secours comprend un membre d'actionnement 23 monté pivotant par rapport au plateau 90, autour d'un axe d'actionneur A2 parallèle à l'axe A9 de la roue, et est entraîné en rotation par un moteur électrique 11.

Ce membre d'actionnement 23 porte l'élément d'actionnement 231 dans une position écartée de l'axe d'actionneur A2 et forme ainsi une came qui actionne le levier 97 de frein de parking par un effet de manivelle.

La came est ici formée par un galet 231 à l'extrémité d'une manivelle 23 située à l'intérieur du plateau 90 du frein 8. Cette manivelle 23 est formée par une partie plane parallèle au plateau, qui est solidaire de et intégrée à un arbre 230 mobile en rotation. L'axe A2 de l'arbre 230 de cette manivelle est parallèle à l'axe A9 de la roue et traverse le plateau 90. Il est solidaire en rotation de l'arbre 220 d'un pignon 22, ici représenté à denture droite mais aussi prévu à denture hélicoïdale ou autre. Ce pignon 22 s'étend autour de l'axe A2 en un secteur angulaire d'une étendue déterminée comme suffisante pour permettre le débattement nécessaire à la manoeuvre de la manivelle 23 et donc du levier 97, entre la position dégagée et la position où le frein est serré.

L'arbre 230 de la manivelle 23 porte ici une forme d'entraînement mâle qui est emmanchée avec une forme d'entrainement femelle complémentaire portée par l'arbre 220 du pignon 22. Les géométries de ces deux formes d'entraînement complémentaires sont avantageusement choisies d'un type qui permet entre elles un certain jeu angulaire avec peu ou pas de dommages et de pertes de rendement dans la puissance transmise. Cette géométrie est ici de type multi-lobulaire, par exemple à six branches ou hexalobulaire tel que défini par la norme ISO 10664, ou dans une version à cinq branches, ou l'une ou l'autre des versions proposées sous le nom de "Torx" par la société Textron.

Le pignon 22 est situé à l'extérieur du plateau 90. Il est actionné par une vis sans fin 21 transversale à l'axe A2 du pignon, par exemple à plus de 45° et ici perpendiculaire à cet axe A2. Le secteur de pignon 22 est enfermé dans un carter 28 qui est fixé à ou intégré dans le plateau 90, et est fermé par un couvercle 24. Ce carter accueille la vis sans fin 21 dans un alésage d'axe A1 parallèle au plan du plateau, et ménagé dans un boîtier de transmission 29 solidaire du carter 28 de pignon, ici intégré dans une même pièce par exemple moulée.

Cette vis sans fin 21 est entraînée par un groupe motoréducteur électrique 1. Ce motoréducteur ou "Motor Gear Unit" (ou MGU) en terminologie anglo-saxonne, aussi appelé ici unité moteur 1, comprend un moteur électrique 11 disposé dans un boîtier cylindrique 18 se terminant par une jupe d'assemblage 19. Cette jupe 19 est emmanchée de façon complémentaire dans un logement d'assemblage 290 cylindrique porté par le boîtier de transmission 29.

### Motoréducteur

Le moteur entraîne ici le mécanisme de transmission 2 par l'intermédiaire d'un réducteur 12 disposé dans un logement de réducteur 190 ménagé à l'intérieur de la jupe d'assemblage.

Comme illustré en FIGURE 4, ce réducteur est ici monté sur l'arbre de sortie du moteur 11, qui est orienté dans la direction de la jupe 19 et est monté dans l'axe de la vis sans fin 21.

Ce réducteur est par exemple d'un type à un ou plusieurs trains épicycloïdaux montés en série, ici deux, qui sont logés à l'intérieur d'une ouverture traversante 190 formant l'intérieur de la jupe d'assemblage 19, par exemple un réducteur du type décrit dans le document FR 1363706.

Dans le présent exemple, ce réducteur 12 comprend deux trains épicycloïdaux 121, 122 montés en série, chacun avec entrée par un pignon central et sortie par le porte-satellites, et dont les satellites engrènent avec une couronne formée dans la surface intérieure de la jupe d'assemblage 19. Cette couronne est de préférence commune aux différents trains épicycloïdaux 121, 122.

L'arbre de sortie 123 du réducteur porte une forme d'entraînement, ici mâle, qui est emmanchée dans une forme d'entraînement complémentaire, ici femelle, formée dans un alésage 210 à l'intérieur de la vis sans fin 21. Ces formes d'entraînements sont par exemple du même type que celles des arbres 230, 220 de manivelle et de pignon.

### Elément de verrouillage

Cet emmanchement est verrouillé par un élément de verrouillage 3, aussi appelé anneau de clipsage ou "snap ring" en Anglais.

Dans l'exemple de mode de réalisation décrit ici, la situation inverse est aussi prévue dans l'invention, dans le cadre des possibilités de l'homme du métier, avec une jupe d'assemblage portée par le boîtier de transmission et un logement d'assemblage ménagé dans le boîtier d'unité moteur.

Cet élément de verrouillage présente :
- une partie de verrouillage, dite verrou de jupe 31, faisant saillie radialement à travers une ouverture de verrouillage ménagée dans la surface de ladite jupe d'assemblage 19, et
- une partie verrouillage, dite verrou de logement 32, faisant saillie radialement à travers une ouverture de verrouillage ménagée dans la surface du logement d'assemblage 290.

Cet élément de verrouillage 3 est ici réalisé par un fil métallique élastique, typiquement en acier à ressort, par exemple d'un diamètre de 0,6mm à 1mm. Au repos, la forme de ce fil présente une pluralité de lobes ou "oreilles" 31 et 32 faisant saillie radialement vers l'extérieur autour de l'axe A1 de l'arbre d'entraînement 123. Cette forme est par exemple obtenue par pliage réalisé en commande numérique (CNC en Anglais).

Ces oreilles sont ici réparties sur la longueur dudit fil métallique pour former successivement et alternativement trois verrous de jupe 31 et trois verrous de logement 32. Les verrous de jupe 31 s'insèrent dans trois fentes traversantes de la jupe, qui sont distribuées angulairement pour former antirotation et de façon irrégulière pour former détrompage. Les verrous de logement 32 s'insèrent dans une rainure interne (non représentée) formée au sein du logement d'assemblage 290, complète ou partielle pour former antirotation et détrompeur.

La jupe d'assemblage 19 est de préférence agencée pour que le réducteur 12 soit en outre maintenu dans ce logement de réducteur 190 par les verrous de jupe 31 de l'élément de verrouillage.

Le logement d'assemblage 290 est de préférence agencé pour que le roulement arrière 211 portant la vis sans fin 21 soit en outre maintenu axialement par les verrous de logement 32.

### Mécanisme de frein

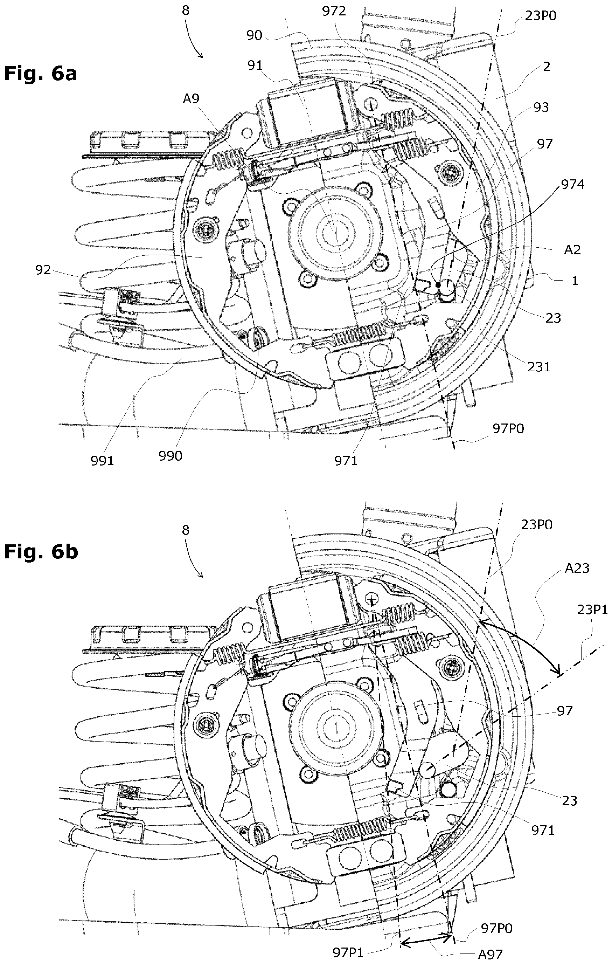

En FIGURE 3 et FIGURE 6 est illustré un mécanisme de frein à tambour 8 à frein de service hydraulique mu par un cylindre de roue 91, et muni de l'actionneur 4 selon l'invention pour la fonction de frein de stationnement et/ou de secours.

La manivelle d'actionnement 23 est entraînée par le motoréducteur 1 disposé à l'extérieur du plateau 90, ici dans une position parallèle au plateau 90 et tangentielle par rapport à l'axe de rotation A9 de la roue, par exemple parallèlement à la direction principale du levier et/ou des segments. Il est ici positionné verticalement à l'arrière du mécanisme de frein dans le cas d'un frein arrière.

Dans d'autres modes de réalisation non représentés ici, le motoréducteur est disposé dans une position radiale par rapport au plateau, ce qui permet d'autres configurations potentiellement avantageuses vis-à-vis des organes voisins, en fonction des besoins et selon l'espace que permet le diamètre du mécanisme.

La commande et l'alimentation électriques arrivent au moteur par un connecteur 42 situé à l'extérieur du mécanisme sur le boîtier du motoréducteur. L'actionneur 4 est fixé sur le plateau 90 par le boîtier de transmission 29, qui assure à l'entraînement mécanique la traversée du plateau.

Comme on le voit en FIGURE 6, la manivelle d'actionnement 23 est située du côté intérieur du plateau 90, c'est à dire du côté portant les segments 92, 93. Le galet 231 de la manivelle vient en contact avec la tranche du levier 94 de frein à main dans une partie constituant ainsi une partie de manoeuvre 974.

En FIGURE 6a, la manivelle 23 est dans une position dégagée ou position de repos dans laquelle elle laisse au levier 97 le débattement nécessaire pour qu'il ne mette pas les segments en appui sur le tambour. Cette position de repos est ici représentée par la direction 23P0 passant par l'axe A2 de la manivelle et le centre du galet d'actionnement 231. La position qu'elle autorise au levier 97 au repos est représentée ici par la direction 97P0 passant par l'articulation 972 du levier sur le segment 93, et par un point situé l'extrémité mobile du levier, par exemple le point de traction 971 prévu pour l'installation d'un câble.

En FIGURE 6b, sous l'action du motoréducteur, la manivelle 23 a pivoté d'un angle A23 jusqu'à une position "actionnée" 23P1. Cette rotation produit un appui par le galet 231 sur le côté du levier 97, jusqu'à le faire pivoter d'un angle A97 pour l'amener dans une position "serrée" 97P1 où il maintient les segments en appui sur le tambour et assure le freinage recherchée.

Comme on le voit en FIGURE 6, l'actionneur 4 est ici installé sur un mécanisme de frein classique, dont le levier 97 est prévu pour recevoir le câble de frein de parking par un autre point de manoeuvre 971. Sur la figure sont aussi représentés la gaine 991 de câble de frein et l'ouverture 990 du plateau sur laquelle la gaine vient en butée, bien que la gaine puisse aussi ne pas être installée du tout. On comprendra qu'il est ainsi possible d'installer l'actionneur sur la plupart des mécanismes classiques, par exemple en fonction de la configuration choisie pour chaque véhicule individuel. Cela peut aussi être possible en deuxième monte à titre de modification d'un véhicule existant.

Dans ce mode de réalisation, c'est la biellette de rattrapage de jeu 911 qui sert de biellette de réaction 98 pour le levier de frein de parking 97.

### Détail du levier

La forme et les dimensions de la came 23 et de son élément de manoeuvre sont par exemple choisies en fonction d'un mécanisme de frein à tambour existant et des dimensions et caractéristiques de son levier 97.

Ainsi, en FIGURE 5 est illustrée une variante de la came 23 portant un élément d'actionnement adapté actionner une partie de manoeuvre prévue sur le levier 97, ici une patte 973 dépassant du levier et recourbée à 180° fixée par un téton 232 formant une liaison pivot d'axe A3 parallèle à l'axe A2 de la manivelle 23 et du pignon 22.

Comme on le voit, ce levier comporte aussi à son extrémité une partie de manoeuvre 971 classique prévue pour y accrocher un câble de frein à main.

Le tableau ci-dessous propose un exemple de dimension pour le levier 97 et la manivelle 23, et comparant la force et le couple obtenus par le câble 99 et par la came 23.

| | F1 (N) | R1 (mm) | F2 (N) | R2 (mm) | R3 (mm) | R4 (mm) | C23 (N.m) | C22 (N/m) | C1 (N.m) | C2 (N.m) |
|---|---|---|---|---|---|---|---|---|---|---|
| WC | 2000 | 131,3 | 2829,1 | 92,8 | 20 | 30 | 56,6 | 37,7 | 262,6 | 262,5 |
| Max nom | 1700 | 131,3 | 2404,8 | 92,8 | 20 | 30 | 48,1 | 32,1 | 223,2 | 223,2 |

Dans lequel :
- F1 (en N) est la force de traction appliquée par le câble à son point de manoeuvre 971 sur le levier 97
- F2 (en N) est la force appliquée par la came 23 à son point de manoeuvre 973 sur le levier 97
- R1 (en mm) est le rayon d'application de la force F1 du câble 99 par rapport à l'articulation 972 du levier 97 sur le segment
- R2 (en mm) est le rayon d'application de la force F2 de la came 23 par rapport à l'articulation 972 du levier 97 sur le segment
- R3 (en mm) est la longueur du bras de manivelle de la came 23,
- R4 (en mm) est le rayon du pignon 22 entraînant la came 23
- C23 (en N.m) est le couple sur l'arbre de la came 23 correspondant la force F2 de la came 23 sur le levier 97
- C22 (en N.m) est la valeur du couple C23 modifiée par le rapport des rayons R3 et R4, en vue de calculer les couples nécessaires au niveau de chacun des composants de la chaîne d'entraînement, jusqu'au couple moteur
- C1 (en N.m) est le couple appliqué au levier 97 par le câble 99 à son point de manoeuvre 971
- C2 (en N.m) est le couple appliqué au levier 97 par la came 23 à son point de manoeuvre 973 autour de son axe de pivotement A97
- la ligne "WC" correspond au pire cas envisagé
- la ligne "Max nom" correspond à la force maximale envisagée de façon nominale, ici avec une force visée de 1200 +/-500

Comme on le voit, la cinématique réalisée par un tel actionneur à came permet d'obtenir le même ordre de grandeur du couple appliqué au levier qu'avec la solution classique du câble de traction, et sans utiliser l'extrémité du levier, donc en gardant les deux possibilités d'actionnement sur un même modèle de levier. Il est ainsi prévu de réaliser un levier 97 dont la forme lui permet de recevoir indifféremment l'un ou l'autre voire les deux en même temps, ainsi qu'un frein à tambour muni d'un tel levier.

Bien sûr, l'invention n'est pas limitée aux exemples qui viennent d'être décrits et de nombreux aménagements peuvent être apportés à ces exemples sans sortir du cadre de l'invention.

### Nomenclature

- 1: motoréducteur
- 2: mécanisme de transmission
- 3: élément de verrouillage
- 4: actionneur électrique
- 8: frein à tambour avec actionneur électrique 4
- 11: moteur électrique
- 12: réducteur
- 121, 122: trains épicycloïdaux du réducteur
- 123: arbre de sortie du motoréducteur
- 18: boîtier de moteur électrique
- 19: jupe d'assemblage
- 190: ouverture de jupe d'assemblage - logement de réducteur
- 21: vis sans fin
- 210: alésage d'entraînement de la vis sans fin
- 211, 212: roulements de la vis sans fin
- 22: secteur de pignon
- 220: forme d'entraînement du pignon 22
- 23: manivelle - membre d'actionnement
- 23P0: position de la manivelle 23 au repos
- 23P1: position de la manivelle 23 actionnée
- 230: arbre d'entraînement de la manivelle
- 231: galet - élément d'actionnement
- 232: téton - élément d'actionnement
- 24: couvercle du pignon 22
- 28: carter du pignon 22
- 29: boîtier de transmission
- 290: logement d'assemblage
- 31: verrou de jupe
- 32: verrou de logement
- 42: connecteur
- 90: plateau du frein à tambour
- 91: actionneur hydraulique
- 94: plaque d'ancrage sur le plateau 90
- 95: tambour
- 96: piste de frottement du tambour
- 97: levier de frein de parking
- 97P0: position du levier 97 au repos
- 97P1: position du levier 97 serré
- 973, 974: partie de manoeuvre du levier 97 par la came-manivelle 23
- 98: biellette de réaction du levier 97
- 99: câble de frein à main
- A1: axe de motoréducteur
- A2: axe d'actionneur
- A23: angle de pivotement de la manivelle 23
- A3: axe de l'élément d'actionnement 231, 232
- A9: axe de rotation de la roue et du tambour
- A97: axe de pivotement du levier 97 sur le segment
- C22: couple sur le pignon 22
- C23: couple sur la manivelle 23
- F1: force appliquée par le câble 99 sur le levier 97
- F2: force appliquée par la manivelle 23 sur le levier 97
- R1: rayon d'application de la traction F1 par le câble 99
- R2: rayon d'application de la force F2 appliquée par la came 23
- R3: rayon de la manivelle 23
- R4: rayon du secteur de pignon 22

## Revendications

1. Dispositif d'actionnement ou actionneur (4) de frein de stationnement et/ou de secours au sein d'un frein (8) de véhicule comprenant un tambour (95) coaxial à une roue dont il est solidaire, portant une jupe coiffant deux segments (92, 93) en arcs de cercle montés face à face autour de son axe de rotation (A2) sur un plateau (90) fixe par rapport au demi-train qui porte la roue, ledit actionneur comprenant un élément d'actionnement (231, 232) qui est mobile par rapport au plateau dans un plan parallèle audit plateau et qui est agencé pour coopérer avec une partie de manoeuvre (973, 974) d'un levier (97) agencé pour pivoter (A97) dans le plan du plateau de façon à écarter l'un de l'autre lesdits segments et les mettre en appui contre l'intérieur dudit tambour,
ledit actionneur étant **caractérisé en ce qu'**il comprend un membre d'actionnement (23) monté pivotant par rapport au plateau autour d'un axe d'actionneur (A2) parallèle à l'axe (A9) de la roue et est entraîné en rotation par un moteur électrique (11),
ledit membre d'actionnement portant l'élément d'actionnement (231, 232) dans une position écartée dudit axe d'actionneur (A2) et formant ainsi une came qui actionne la partie de manoeuvre (973, 974) du levier (97) par un effet de manivelle.

2. Actionneur (4) selon la revendication précédente, **caractérisé en ce que** le membre d'actionnement (23) est solidaire en rotation d'un arbre de pivot (230) solidaire d'un pignon ou d'un secteur de pignon d'actionnement (22) lui-même entraîné par une vis sans fin (21) entraînée par le moteur électrique (11), directement ou par l'intermédiaire d'un réducteur (12).

3. Frein à tambour (8) comprenant un actionneur (4) selon l'une quelconque des revendications précédentes, qui est agencé pour actionner le levier (97) de frein de service et/ou de secours dudit frein à tambour.

4. Frein (8) selon la revendication précédente, **caractérisé en ce que** le membre d'actionnement (23) est situé du côté intérieur du plateau (90), et **en ce que** ledit pignon d'actionnement (22) et le moteur (11) qui l'entraîne sont situés du côté extérieur dudit plateau.

5. Frein (8) selon l'une quelconque des revendications 3 à 4, **caractérisé en ce que** l'élément d'actionnement (231, 232) est entraîné par le moteur (11) ou un motoréducteur (1) disposé à l'extérieur du plateau (90) et dans une position parallèle audit plateau, notamment tangentielle ou radiale par rapport audit plateau.

6. Frein (8) selon l'une quelconque des revendications 3 à 5, **caractérisé en ce qu'**il comprend un actionneur hydraulique (91) réalisant la fonction de frein de service.

7. Frein à tambour selon l'une quelconque des revendications 3 à 5, **caractérisé en ce qu'**il est monté à l'intérieur d'un frein à disque réalisant la fonction de frein de service, et dont le disque présente une partie creuse formant le tambour dudit frein à tambour.

8. Véhicule ou sous ensemble de véhicule comprenant un frein (8) selon l'une quelconque des revendications 3 à 7 ou un frein comprenant un actionneur (4) selon l'une quelconque des revendications 1 à 2.

9. Procédé de fabrication d'un frein à tambour, comprenant les étapes suivantes :
- fourniture d'un mécanisme de frein à tambour (9) comprenant un tambour (95) coaxial à une roue dont il est solidaire, portant une jupe coiffant deux segments (92, 93) en arcs de cercle montés face à face autour de son axe de rotation (A2) sur un plateau (90) fixe (par rapport au demi-train qui porte la roue), du type comprenant :
∘ d'une part un actionneur hydraulique (91) agencé pour réaliser une fonction de frein de service, et
∘ d'autre part un levier (97) agencé pour pivoter dans le plan du plateau de façon à écarter l'un de l'autre lesdits segments et les mettre en appui à l'intérieur dudit tambour sous l'effet d'une traction qui lui est appliquée par un câble (97),
ledit plateau comprenant une ouverture (990) qui est agencée pour laisser entrer ledit câble et est munie d'une forme agencée pour réaliser une butée d'une gaine flexible (991) entourant ledit câble ; et
- fixation ou intégration au plateau (90), au montage ou lors de la conception, d'un actionneur électrique (4) selon l'une quelconque des revendications 1 à 2.

10. Procédé selon la revendication précédente, **caractérisé en ce que** l'actionneur électrique (4) est agencé et fixé ou intégré de façon à réaliser un frein à tambour (8) selon l'une quelconque des revendications 3 à 8.

## Patentansprüche

1. Stelleinrichtung bzw. Aktor (4) für Parkbremse und/oder Notbremse innerhalb einer Fahrzeugbremse (8), umfassend eine Trommel (95) koaxial zu einem mit ihr starr gekuppelten Rad, eine Schürze tragend, die zwei kreisbogenförmigen Bremsbacken (92, 93) überdeckt, welche gegenüber einander auf einer im Vergleich zu der das Rad tragenden Achshälfte starren Bremsankerplatte (90) um deren Drehachse (A2) aufgenommen sind,
wobei der Aktor ein Stellelement (231, 232) umfasst, das im Vergleich zu der Bremsankerplatte in einer parallel zu der Bremsankerplatte verlaufenden Ebene beweglich ist und derart angeordnet ist, um mit einem Betätigungsteil (973, 974) eines Hebels (97) zusammenzuwirken, welcher dazu angeordnet ist, um in der Ebene der Bremsankerplatte derart drehbar (A97) zu sein, dass es die Bremsbacken auseinander spreizt und sie gegen das Innere der Trommel andrückt,
wobei der Aktor **dadurch gekennzeichnet ist, dass** er ein Stellglied (23) umfasst, das um eine parallel zu der Drehachse (A9) des Rads verlaufenden Drehachse eines Aktors (A2) drehbar gegenüber der Bremsankerplatte aufgenommen ist, und dass er durch einen Elektromotor (11) drehbeweglich angetrieben wird,
wobei das Stellglied das Stellelement (231, 232) in eine von der Aktorachse (A2) beabstandete Position bringt und somit einen Nocken bildet, der den Betätigungsteil (973, 974) des Hebels (97) über eine Kurbelwirkung betätigt.

2. Aktor (4) nach dem vorhergehenden Anspruch, **dadurch gekennzeichnet, dass** das Stellglied (23) mit einer Drehwelle (230) drehfest verbunden ist, welche mit einem Ritzel oder mit einem Betätigungsritzelbereich (22) starr verbunden ist, der wiederum durch eine Schnecke (21) angetrieben wird, welche direkt oder über eine Untersetzung (12) durch den Elektromotor (11) angetrieben wird.

3. Trommelbremse (8) umfassend einen Aktor (4) nach einem der vorhergehenden Ansprüche, welcher derart angeordnet ist, um den Hebel (97) für Fahrbremse und/oder Notbremse der Trommelbremse zu betätigen.

4. Bremse (8) nach dem vorhergehenden Anspruch, **dadurch gekennzeichnet, dass** das Stellglied (23) innenseitig von der Bremsankerplatte (90) gelagert ist, und dadurch dass der Betätigungsritzel (22) und der ihn antreibende Motor (11) außenseitig von der Bremsankerplatte gelagert sind.

5. Bremse (8) nach einem der Ansprüche 3 bis 4, **dadurch gekennzeichnet, dass** das Stellelement (231, 232) durch den Motor (11) oder einen Motor mit Untersetzung (1) angetrieben wird, welcher außerhalb der Bremsankerplatte (90) und in einer Position parallel zu der Bremsankerplatte, insbesondere tangential oder radial zu der Bremsankerplatte gelagert ist.

6. Bremse (8) nach einem der Ansprüche 3 bis 5, **dadurch gekennzeichnet, dass** sie einen hydraulischen Aktor (91) umfasst, der die Fahrbremsfunktion ausführt.

7. Trommelbremse nach einem der Ansprüche 3 bis 5, **dadurch gekennzeichnet, dass** sie innerhalb einer die Fahrbremsfunktion ausführenden Scheibenbremse aufgenommen ist, und deren Scheibe einen hohlen Teil aufweist, der die Trommel der Trommelbremse bildet.

8. Fahrzeug oder Fahrzeugunteranordnung, umfassend eine Bremse (8) nach einem der Ansprüche 3 bis 7 oder eine Bremse, die einen Aktor (4) nach einem der Ansprüche 1 bis 2 umfasst.

9. Verfahren zur Herstellung einer Trommelbremse, folgende Schritte umfassend:
- Bereitstellung einer Trommelbremseeinrichtung (9), umfassend eine Trommel (95) koaxial zu einem mit ihr starr gekuppelten Rad, eine Schürze tragend, die zwei kreisbogenförmigen Bremsbacken (92, 93) überdeckt, welche gegenüber einander auf einer (im Vergleich zu der das Rad tragenden Achshälfte) starren Bremsankerplatte (90) um deren Drehachse (A2) aufgenommen sind, vom Typ umfassend:
∘ einerseits einen hydraulischen Aktor (91), derart angeordnet, um eine Fahrbremsfunktion auszuführen, und
∘ andererseits einen Hebel (97), derart angeordnet, um in der Ebene der Bremsankerplatte so zu drehen, dass die Bremsbacken auseinander gespreizt und innerhalb der Trommel unter Einwirkung einer ihm durch ein Seil (97) aufgebrachten Zugkraft angedrückt werden,
wobei die Bremsankerplatte eine Öffnung (990) umfasst, welche zum Durchlass des Seils ausgebildet ist, und mit einer Form ausgestattet ist, die zur Ausführung eines Anschlags einer schlauchartigen Umhüllung (991) um das Seil ausgebildet ist, und
- Befestigung an der Bremsankerplatte (90) oder Einbau in die Bremsankerplatte (90) eines elektrischen Aktors (4) nach einem der Ansprüche 1 bis 2 bei der Montage oder während der Konstruktion.

10. Verfahren nach dem vorhergehenden Anspruch, **dadurch gekennzeichnet, dass** der elektrische Aktor (4) zur Ausführung einer Trommelbremse (8) nach einem der Ansprüche 3 bis 8 ausgebildet und befestigt oder eingebaut ist.

## Claims

1. Actuating device or actuator (4) for a parking and/or emergency brake within a vehicle brake (8) comprising a coaxial drum (95) with a wheel to which it is solidly attached, supporting a skirt crowning two shoes (92, 93) in circular arcs mounted opposite one another around its axis of rotation (A2) on a plate (90) that is fixed with respect to the half axle that supports the wheel,
said actuator comprising an actuating element (231, 232) that is movable in relation to the plate in a plane parallel to the plate, which is arranged to engage with a manoeuvring part (973, 974) of a lever (97) arranged to pivot (A97) in the plane of the plate so as to separate the shoes from one another and press them against the interior of the drum,
said actuator being **characterized in that** it comprises an actuating member (23) pivotally mounted in relation to the plate around an actuator axis (A2) parallel to the axis (A9) of the wheel and is driven in rotation by an electric motor (11),
said actuating member supporting the actuating element (231, 232) in a position separate to the actuator axis (A2) and thus forming a cam that activates the manoeuvring part (973, 974) of the lever (97) by a crank effect.

2. Actuator (4) according to the preceding claim, **characterized in that** the actuating member (23) is rotationally secured to a pivot shaft (230) which is solidly attached to an actuating pinion or pinion sector (22), which is itself driven by an endless screw (21) driven by the electric motor (11), directly or through a reduction gear (12).

3. Drum brake (8) comprising an actuator (4) according to any of the preceding claims, which is arranged to activate the service and/or emergency brake lever (97) of the drum brake.

4. Brake (8) according to the preceding claim, **characterized in that** the actuating member (23) is located on the interior side of the plate (90), and **in that** the actuating pinion (22) and the motor (11) that drives it are located on the exterior side of the plate.

5. Brake (8) according to any of the claims 3 to 4, **characterized in that** the actuating element (231, 232) is driven by the motor (11) or a geared motor (1) arranged on the exterior of the plate (90) and in a position that is parallel to the plate, in particular a tangential or radial position with respect to the plate.

6. Brake (8) according to any of the claims 3 to 5, **characterized in that** it comprises a hydraulic actuator (91) performing the service brake function.

7. Drum brake according to any of the claims 3 to 5, **characterized in that** it is mounted inside a disc brake performing the service brake function, in which the disc has a hollow portion forming the drum of said drum brake.

8. Vehicle or vehicle sub-assembly comprising a brake (8) according to any of the claims 3 to 7 or a brake comprising an actuator (4) according to any of the claims 1 to 2.

9. Manufacturing method for a drum brake, comprising the following steps:
- provision of a drum brake mechanism (9) comprising a coaxial drum (95) with a wheel to which it is solidly attached, supporting a skirt crowning two shoes (92, 93) in circular arcs mounted opposite one another around its axis of rotation (A2) on a plate (90) that is fixed (in relation to the half axle that supports the wheel), comprising:
∘ on one hand, a hydraulic actuator (91) arranged to perform a service brake function, and
∘ on the other hand, a lever (97) arranged to pivot in the plane of the plate so as to separate the shoes from one another and press them against the interior of the drum under the effect of a traction that is applied to it by a cable (97),
said plate comprising an opening (990) which is arranged to allow the aforementioned cable to enter and has a shape that serves as a stop for a flexible sheath (991) surrounding the cable; and
- attachment to or integration with the plate (90) during assembly or design of an electric actuator (4) according to any of the claims 1 to 2.

10. Method according to the preceding claim, **characterized in that** the electric actuator (4) is arranged and attached or integrated so as to create a drum brake (8) according to any of the claims 3 to 8.
